# EUROPÄISCHE PATENTSCHRIFT

(11) **EP 2 022 319 B1**
(45) Veröffentlichungstag und Bekanntmachung des Hinweises auf die Patenterteilung: **20.10.2010**
(21) Anmeldenummer: 08158235.5
(22) Anmeldetag: 13.06.2008
(51) Int. Cl.: A01F 15/08

(54) **Landwirtschaftliche Ballenpresse**
Agricultural baling press
Presse à paquet agricole

(30) Priorität: 31.07.2007 DE 102007036293
(43) Veröffentlichungstag der Anmeldung: 11.02.2009
(73) Patentinhaber: Usines CLAAS France S.A.S., 57148 St. Rémy/Woippy CEDEX (FR)
(72) Erfinder: Fuchs, Volker, 54329, Konz (DE)
(74) Vertreter: Ellerbrächter, Dirk

(56) Entgegenhaltungen:
- EP-A- 0 382 263
- EP-A- 0 745 320
- US-A- 5 735 199

## Beschreibung

Die Erfindung betrifft eine landwirtschaftliche Großballenpresse gemäß dem Oberbegriff des Anspruchs 1.

Solche Großballenpressen dienen zur Erzeugung von quaderförmigen Ballen aus landwirtschaftlichem Erntegut wie Stroh, Heu, oder angewelktem Grüngut und nachwachsenden Rohstoffen. Derartige Großballenpressen bestehen im Wesentlichen aus einer Aufnahmetrommel zur Aufnahme des Erntegutes vom Ernteboden, an die sich ein Schneidrotor mit einem nachgeordneten Förderrechen anschließt, so dass dadurch das Erntegut einem Presskanal mit einem hin und her bewegbaren Presskolben zugeführt werden kann.

Neben der Strohpressung erfolgt zunehmend auch die Verpressung von Heu und Welkgut für die Bevorratung und für Silage zu Großballen, um eine effektivere Bewirtschaftung in der Nutztierhaltung zu erreichen. Eine wichtige Voraussetzung für das Pressen gleichmäßig hochverdichteter, quaderförmiger Ballen ist, dass die Großballen die annähernd maximal mögliche Pressdichte aufweisen, die die genannten Erntegüter vertragen, um insbesondere Transport- und Lagerkapazitäten optimal und effektiv nutzen zu können. Zudem spielt die Einhaltung bzw. das Erreichen der empfohlenen Pressdichte für den Erhalt einer guten Silierfähigkeit des gepressten Erntegutes eine wichtige Rolle.

Zur Erhöhung der Presskraft im Presskanal ist es bekannt, die Seitenwände des Presskanals schwenkbeweglich mit hydraulischen Pressmitteln auszustatten. In der DE 198 18 127 C1 ist eine Presskanal-Spanneinrichtung für eine obere schwenkbewegliche Presskanalwand offenbart, um durch konische Verengung des Presskanals die Pressdichte zu steuern. Die DE 197 18 579 B4 offenbart eine Großballenpresse mit einem auf einem Pressring angeordneten Hydraulikzylinder, der durch Ausfahren die mit ihm verbundenen schwenkbeweglichen seitlichen Begrenzungen der Presskammer bewegen kann, um durch die entstehende Verengung der Querschnittsfläche der Presskammer einen zusätzlichen Druck auf dass zu pressende Erntegut auszuüben.

Nachteilig an den bekannten Ausführungsformen ist, dass die Regelung der Presskraft der schwenkbeweglichen Seitenwände in einem konstanten Verhältnis zueinander erfolgt und dadurch die erforderliche Variabilität der Presskraftregelung zur Anpassung an unterschiedliche Erntegutbedingungen nicht vorhanden ist. Insbesondere bei der Verpressung von Welkgut zu Silageballen kann die nicht vorhandene Variabilität der Presskraftregelung, zu einem "Aufrollen" des Welkgutes im Presskanal führen.

Der Erfindung liegt deshalb die Aufgabe zugrunde, die Nachteile des zitierten Standes der Technik zu vermeiden und eine Großballenpresse, insbesondere sogenannte HD (High Density) Pressen der eingangs genannten Art derart weiterzuentwickeln, dass eine separate Regelung einzelner schwenkbeweglicher Begrenzungen des Presskanals ermöglicht wird.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem das Verhältnis der Presskraft der Anpresseinrichtung der wenigstens einen oberen schwenkbeweglichen Presswand zur Presskraft der Anpresseinrichtungen der schwenkbeweglichen Seitenwände einstellbar ist, ist sichergestellt, dass die Anpresseinrichtungen der Presskammer einer Großballenpresse den zu pressenden Ballen mit dem optimalen Pressdruckverhältnis zur Erreichung der maximalen Pressdichte beaufschlagen, so dass insbesondere durch eine geringere Presskrafteinleitung von der oberen Pressklappe, ein Aufrollen des Erntegutes, insbesondere Welkgut, in der Presskammer nicht zu befürchten ist. Andererseits kann bei der Verpressung von Stroh und Heu der Presskanal mit einem erhöhten Pressdruck beaufschlagt werden.

In einer vorteilhaften Weiterbildung der Erfindung sind die Anpresseinrichtungen als Hydraulikzylinder ausgebildet, so dass effektiv und kostengünstig die variable Regelung der Presskraft der Anpresseinrichtungen ermöglicht wird.

Dadurch, dass die Anpresseinrichtungen auf einem die Presskammer umfassenden Pressring angeordnet sind, ist sichergestellt, dass eine gleichmäßige Einleitung der Presskraft in die Presskammer der Ballenpresse erfolgt.

Im einfachsten Fall ist die Anpresseinrichtung der oberen Presswand aus wenigstens drei nebeneinander angeordneten hydraulischen Arbeitszylindern gebildet, so dass eine optimale Verteilung der in den Presskanal eingeleiteten Presskraft über die Breite des Presskanals möglich ist und damit das Erreichen der maximalen Pressdichte eines Großballens. Zudem ist denkbar anstelle von mehreren Arbeitszylinder einen entsprechend groß dimensionierten und unterschiedliche Ringflächen aufweisenden Arbeitszylinder zu verwenden um den gleichen Effekt zu erhalten.

In einer weiteren vorteilhaften Weiterbildung der Erfindung erfolgt die Krafteinleitung der Anpresseinrichtung der oberen Presswand in Abhängigkeit von der Erntegutart entweder mittels des mittleren Arbeitszylinders alleine oder zusammen durch wenigstens die beiden äußeren Arbeitszylinder, so dass insbesondere bei der Verpressung von Welkgut zu Silageballen, der zu pressende Ballen von der oberen Presswand mit weniger Pressdruck beaufschlagbar ist und bei der Verpressung von Stroh jedoch der benötigte hohe Pressdruck durch den Einsatz von wenigstens zwei Arbeitszylindern erreichbar ist. Zur Ermittlung der Erntegutart ist der Ballenpresse vorteilhaft ein entsprechender Sensor zugeordnet.

Zur Vereinfachung der Einstellung der Presskraft der oberen Presswand weist der mittleren Arbeitszylinder einen von den beiden äußeren Arbeitszylindern getrennten Hydraulikkreislauf auf. Im einfachsten Fall kann der Wechsel von der Krafteinleitung über den mittleren hydraulischen Arbeitszylinder zur Krafteinleitung über wenigstens die zwei äußeren hydraulischen Arbeitszylinder manuell durch Betätigung eines Umschaltventils erfolgen.

Dadurch, dass zur automatischen Regelung der Presskraft der Anpresseinrichtung der oberen Presswand und zur Regelung der Presskraft der Anpresseinrichtungen der Seitenwände eine elektronischen Steuervorrichtung vorhanden ist, erfährt der Bediener vorteilhaft eine Entlastung und kann sich entsprechend auf die Bedienung der Ballenpresse konzentrieren.

In einer weiteren vorteilhaften Ausgestaltung der Erfindung ist vorgesehen, dass eine die landwirtschaftliche Ballenpresse ziehende landwirtschaftliche Arbeitsmaschine, insbesondere ein Schlepper, ein Bedienterminal zur Einstellung der Presskraft der Anpresseinrichtungen aufweist, so dass der Fahrer eine weitere Entlastung in der Bedienung der Ballenpresse erfährt.

Weitere vorteilhafte Ausgestaltungen sind Gegenstand weiterer Unteransprüche und werden nachfolgend anhand von Zeichnungen näher erläutert.

Es zeigen:
- Figur 1:: eine Großballenpresse in der Seitenansicht
- Figur 2:: der Schnitt A-A nach Fig. 1

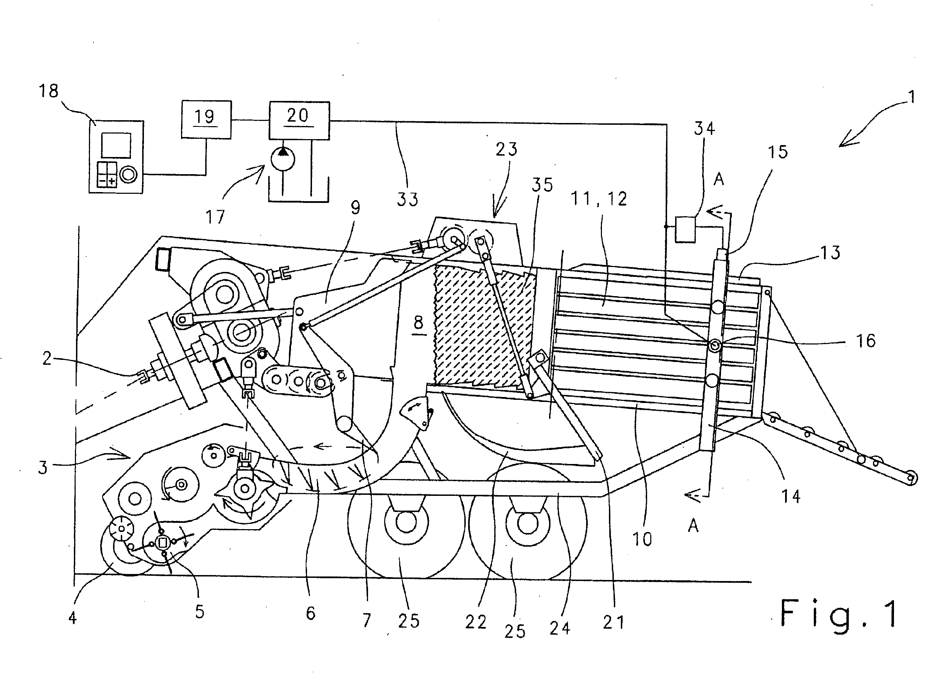

Fig. 1 zeigt eine schematische Darstellung einer Großballenpresse 1 in der Seitenansicht, die von einem nicht dargestellten Zugfahrzeug gezogen und die Antriebs- und Funktionsvorrichtungen über eine Zapfwelle 2 angetrieben werden.

Frontseitig ist der Ballenpresse 1 ein Erntegutaufnehmer 3 zugeordnet, der über Stützradanordnungen 4 auf dem Boden höhenbeweglich geführt wird. Der Erntegutaufnehmer 3 verfügt zur Aufnahme des auf dem Boden liegenden Erntegutes über eine aktiv, gemäß Pfeilrichtung angetriebene Pickup-Trommel 5, die das Erntegut oberschlächtig in einen Zuführkanal 6 befördert, wo es von einem Förderer 7 in den rechteckförmigen Presskanal 8 weiterbefördert und vom Presskolben 9 gegen den sich bereits in dem rechteckförmigen Presskanal 8 befindlichen Erntegutstrang gepresst wird. Der Presskanal 8 verläuft in einer in Pressrichtung P geneigstrang gepresst wird. Der Presskanal 8 verläuft in einer in Pressrichtung P geneigten Ebene und umfasst einen starren Presskanalboden 10, zwei seitliche schwenkbewegliche Pressklappen 11, 12 und eine obere schwenkbewegliche obere Pressklappe 13. Auf einem um den Presskanal 8 angeordneten Pressring 14 befinden sich noch näher darzustellende obere und seitliche Anpresseinrichtungen 15, 16. Mittels der Anpresseinrichtungen 15, 16 können die damit in Verbindung stehende obere Pressklappe 13 und die Seitenwände 11, 12 so bewegt werden, dass dadurch die Querschnittsfläche des Presskanals 8 in Förderrichtung gesehen verringert wird, so dass zusätzlich zur Presskraft des Presskolbens 9 durch die Verengung der Querschnittsfläche des Presskanals 8 eine zusätzliche Presskraft auf den sich im Presskanal 8 befindenden Erntegutstrang ausgeübt wird, um die maximal mögliche Pressdichte des Ballens zu erreichen. Die Pressdruckeinstellung der Anpresseinrichtungen 15, 16 erfolgt mittels einer Bordhydraulik 17 die den Öldruck in den Anpresseinrichtungen 15, 16 regelt. Die Einstellung erfolgt über ein Bedienterminal 18 welches mit einer elektronischen Steuervorrichtung 19 zur Steuerung eines Ventilblocks 20 der Bordhydraulik 17 in Verbindung steht. Erreicht der Erntegutstrang eine vorgegebene Länge, erfolgt der Bindevorgang mittels Bindegarn durch an Nadelschwingen 21 angeordnete Bindenadeln 22 sowie oberhalb des Presskanals 8 angebrachte, mit den Bindenadeln 22 zusammenwirkende Knotereinrichtungen. Der fertig gepresste und gebundene Ballen wird über eine nicht dargestellte Abgaberutsche auf dem Feld abgelegt. Der Erntegutaufnehmer kann zudem obenseitig ein Niederhalteorgan sowie im rückwärtigen Bereich ein Übergabeorgan mit Querförderfunktion aufweisen, zur Formung eines homogen strukturierten Erntegutstrangs. Sämtliche Belastungen der Großballenpresse 1 werden von dem Tragrahmen 24 aufgenommen und über die Laufräder 25 in Tandemanordnung auf den Feldboden übertragen. Denkbar ist, die nicht näher dargestellte Achse ein- oder vielachsig auszuführen.

Bislang konnte das Verhältnis der Krafteinleitung über die obere Pressklappe 13 zur Krafteinleitung über die seitlichen Presswände11, 12 nicht eingestellt werden, so dass trotz einer Reduzierung oder einer Erhöhung des Drucks in der Bordhydraulik 17 das Verhältnis der Krafteinleitung stets konstant war. Insbesondere bei Großballenpressen 1, den sog. HD Pressen, führt dies zum Problem, dass das vorhandene Presskraftverhältnis bei der Verpressung von Welkgut zu Silageballen zum Aufrollen des Erntegutstrang im Presskanal 8 führt.

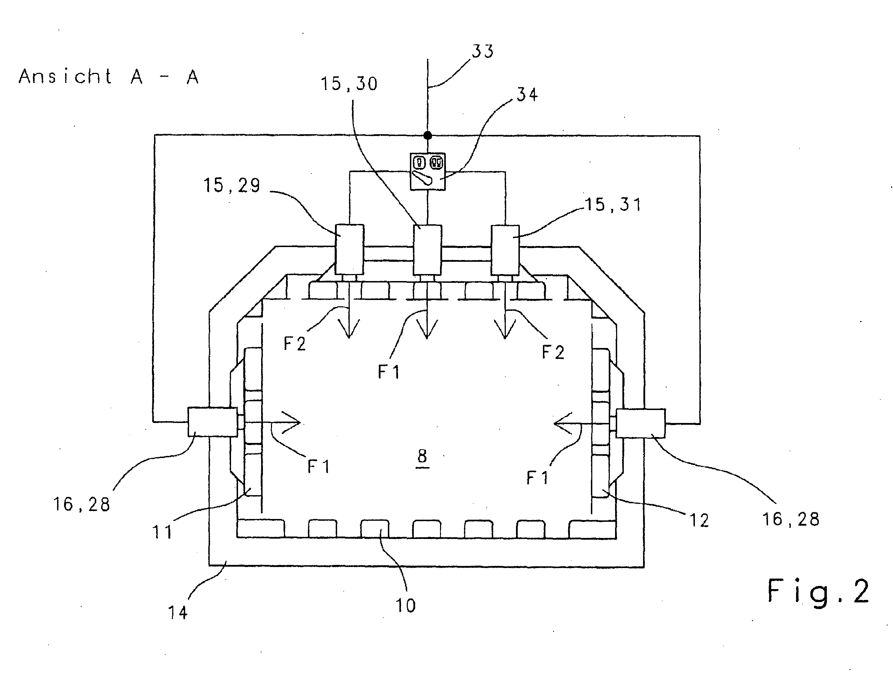

Wie in Fig. 2 nun näher dargestellt ist, ist erfindungsgemäß das Verhältnis der Presskraft der Anpresseinrichtung 15 der wenigstens einen oberen schwenkbeweglichen Pressklappe 13 zur Presskraft der Anpresseinrichtungen 16 der schwenkbeweglichen Seitenwände 11, 12 einstellbar. Der rechteckige Presskanal 8 umfasst eine unteren Pressboden 10, zwei seitliche schwenkbewegliche Presswände 11, 12 und eine obere schwenkbewegliche aus parallel nebeneinander angeordnete Längsträger 26 bestehende Pressklappe 13, die von einem Anpresseinrichtungen aufweisenden 15, 16 Pressring 27 umgeben ist. Den schwenkbeweglichen Seitenwänden 11, 12 ist jeweils eine Anpresseinrichtung 16 in Form eines hydraulischen Arbeitszylinders 28 zugeordnet, wobei die Anpresseinrichtung 15 der oberen schwenkbeweglichen Pressklappe 13 aus drei nebeneinander liegenden hydraulischen Arbeitszylindern 29, 30, 31 gebildet wird. Denkbar ist anstelle der drei nebeneinander liegenden Arbeitszylindern 29, 30, 31 einen einzelnen entsprechend groß dimensionierten, die erforderlichen Presskraft erzeugenden Arbeitszylinder mit unterschiedlichen Ringflächen zu verwenden. Mittels der Anpresseinrichtungen 15, 16 wird der Querschnitt des rechteckförmigen Presskanals 8 verringert, um so eine zusätzliche Presskraft, von der oberen Pressklappe 13 und von den Seitenwänden 11, 12 auf den sich im Presskanal 8 befindenden Erntegutstrang auszuüben. Die zum Betreiben der Arbeitszylinder 28, 29, 30, 31 vorhandene Bordhydraulik 17 umfasst ein Ventilblock 20, der von einer Pumpe 32 mit Hydraulikflüssigkeit versorgt wird, um im Hydraulikkreislauf einen einheitliche Druck aufbauen zu können. An der Zuleitung 33 zu den hydraulischen Arbeitszylindern 29, 30, 31 der Anpresseinrichtung 15 der oberen Pressklappe 13 ist ein Umschaltventil 34 zwischengeschaltet, mit dem erfindungsgemäß das Presskraftverhältnis der oberen Pressklappe 13 zu den Seitenwänden 11, 12 einstellbar ist. In der ersten Stellung des Umschaltventils 34 wird neben den beiden sich an den Seitenwänden 11, 12 befindlichen Arbeitszylindern 28 der mittlere auf dem Pressring 14 oberhalb der Pressklappe 13 angeordnete Arbeitszylinder 30 mit Druck beaufschlagt, um dann die Einleitung der Presskraft F1 in den Presskanal 8 durch eine Querschnittsverringerung zu bewirken. Diese Konstellation eignet sich insbesondere für die Verpressung von Welkgut zu Silageballen, da bei der Verpressung von Welkgut eine zu hohe Presskrafteinleitung über die obere Pressklappe 13 ein Aufrollen des Erntegutstranges im Presskanal 8 bewirken würde. Wenn das Umschaltventil 34 geschaltet wird, werden die jeweils an den Seitenwänden 11, 12 angeordneten Arbeitszylinder 28 und die äußeren auf dem Pressring 14 oberhalb der Pressklappe 13 angeordneten Arbeitszylindern 29, 31 mit Druck beaufschlagt, so dass neben der Presskraft F1 der Seitenwände 11, 12 die höhere Presskraft F2 durch die Querschnittsveränderung des Presskanals 8 eingeleitet wird, wobei die höhere Presskraft F2 insbesondere zum Verpressen von Stroh benötigt wird, um die erforderliche maximale Pressdichte zu erreichen. An dem Ventilblock 20 der Bordhydraulik 17 ist eine elektronische Steuervorrichtung 19 angeschlossen, die in an sich bekannter Weise die Schaltstellung der Ventile regelt. Die Einstellung des Pressdrucks wie auch das Schalten des Umschaltventils 34 erfolgen mittels eines Bedienterminals 18, das über die elektronische Steuervorrichtung 19 mit der Bordhydraulik 17 in Verbindung steht. Denkbar ist, dass das Bedienterminal 18 an der Ballenpresse 1 oder auf das die Ballenpresse ziehende Zugfahrzeug angeordnet ist. Denkbar ist zudem, dass das Umschalten des Umschaltventils manuell vom Bediener der Ballenpresse erfolgt.

Vorteilhafter Weise ist der Ballenpresse 1 ein nicht näher dargestellter Sensor zur Bestimmung erntegutspezifischer Parameter zugeordnet, um insbesondere die Erntegutart oder die Erntegutfeuchte bestimmen zu können und entsprechend das Pressdruckverhältnis einstellen zu können. Vorteilhafterweise erfolgt das Einstellen des Pressdruckverhältnisses entsprechend des sensierten Erntegutparameters automatisch mittels der elektronischen Steuervorrichtung 19.

Es liegt im Rahmen des Könnens eines Fachmanns das beschriebene Ausführungsbeispiel in nicht dargestellter Weise abzuwandeln, um die beschriebenen Effekte zu erzielen, ohne dabei den Rahmen der Erfindung zu verlassen, insbesondere kann es Anwendung finden auf einer selbstfahrenden Kolbenpresse.

### Bezugszeichenliste:

- 1: Großballenpresse
- 2: Zapfwelle
- 3: Erntegutaufnehmer
- 4: Stützradanordnung
- 5: Pickup-Trommel
- 6: Zuführkanal
- 7: Förderer
- 8: Presskanal
- 9: Presskolben
- 10: Presskanalboden
- 11: seitliche Presswand
- 12: seitliche Presswand
- 13: obere Pressklappe
- 14: Pressring
- 15: Anpresseinrichtung
- 16: Anpresseinrichtung
- 17: Bordhydraulik
- 18: Bedienterminal
- 19: Steuervorrichtung
- 20: Ventilblock
- 21: Nadelschwinge
- 22: Bindenadel
- 23: Knotereinrichtung
- 24: Tragrahmen
- 25: Laufräder
- 26: Längsträger
- 28: hydraulischer Arbeitszylinder
- 29: hydraulischer Arbeitszylinder
- 30: hydraulischer Arbeitszylinder
- 31: hydraulischer Arbeitszylinder
- 32: Pumpe
- 33: Zuleitung
- 34: Umschaltventil

## Patentansprüche

1. Landwirtschaftliche Ballenpresse mit einer Steuereinrichtung zur Steuerung der Presskraft in einem Presskanal, bestehend aus einer Aufnahmevorrichtung, einem Zuführkanal und wenigstens einer oberen schwenkbeweglichen Pressklappe und schwenkbeweglichen Seitenwänden, die mit Anpresseinrichtungen ausgestattet sind,
**dadurch gekennzeichnet, dass**
das Verhältnis der Presskraft der Anpresseinrichtung (15) der wenigstens einen oberen schwenkbeweglichen Pressklappe (13) zur Presskraft der Anpresseinrichtungen (16) der schwenkbeweglichen Seitenwände (11, 12) einstellbar ist.

2. Landwirtschaftliche Ballenpresse nach Anspruch 1,
**dadurch gekennzeichnet, dass**
die Anpresseinrichtungen (15,16) als hydraulische Arbeitszylinder (28, 29, 30, 31) ausgebildet sind.

3. Landwirtschaftliche Ballenpresse nach wenigstens einem der vorhergehenden Ansprüche,
**dadurch gekennzeichnet, dass**
die Anpresseinrichtungen (15, 16) auf einem den Presskanal (8) umfassenden Pressring (14) angeordnet sind.

4. Landwirtschaftliche Ballenpresse nach Anspruch 3,
**dadurch gekennzeichnet, dass**
die Anpresseinrichtung (15) der oberen Pressklappe (13) aus wenigstens drei nebeneinander angeordneten hydraulischen Arbeitszylindern (29, 30, 31) gebildet ist.

5. Landwirtschaftliche Ballenpresse nach wenigstens einem der vorhergehenden Ansprüche,
**dadurch gekennzeichnet, dass**
in Abhängigkeit von der Erntegutart die Krafteinleitung der Anpresseinrichtung (15) der oberen Pressklappe (13) entweder mittels des mittleren Arbeitszylinders (30) oder zusammen durch wenigstens die beiden äußeren hydraulischen Arbeitszylinder (29, 31) erfolgt.

6. Landwirtschaftliche Ballenpresse nach Anspruch 6,
**dadurch gekennzeichnet, dass**
der mittlere Arbeitszylinder (30) einen von den beiden äußeren Arbeitszylindern (29, 31) getrennten Hydraulikkreislauf aufweist.

7. Landwirtschaftliche Ballenpresse nach wenigstens einem der vorhergehenden Ansprüche,
**dadurch gekennzeichnet, dass**
der Wechsel von der Presskrafteinleitung in den Presskanal (8) über den mittleren hydraulischen Arbeitszylinder (30) zur Krafteinleitung über wenigstens die zwei äußeren hydraulischen Arbeitszylinder (29, 31) manuell durch Betätigung eines Umschaltventils (34) erfolgt.

8. Landwirtschaftliche Ballenpresse nach wenigstens einem der vorhergehenden Ansprüche,
**dadurch gekennzeichnet, dass**
die Anpresseinrichtung (15) der oberen Pressklappe (13) aus einen unterschiedliche Ringflächen aufweisenden hydraulischen Arbeitszylinder gebildet ist.

9. Landwirtschaftliche Ballenpresse nach wenigstens einem der vorhergehenden Ansprüche,
**dadurch gekennzeichnet, dass**
die Ballenpresse (1) wenigstens einen Sensor zur Ermittlung erntegutspezifischer Parameter aufweist.

10. Landwirtschaftliche Ballenpresse nach wenigstens einem der vorhergehenden Ansprüche,
**dadurch gekennzeichnet, dass**
zur automatischen Steuerung der Presskraft der Anpresseinrichtung (15) der oberen Pressklappe (13) und zur Steuerung der Presskraft der Anpresseinrichtungen (16) der Seitenwände (11, 12) wenigstens eine elektronische Steuervorrichtung (19) vorhanden ist.

11. Landwirtschaftliche Ballenpresse nach wenigstens einem der vorhergehenden Ansprüche,
**dadurch gekennzeichnet, dass**
die landwirtschaftliche Ballenpresse (1) oder ein die Ballenpresse ziehende landwirtschaftliche Arbeitsmaschine ein Bedienterminal (18) zur Einstellung der Presskraft der Anpresseinrichtungen aufweist.

12. Landwirtschaftliche Ballenpresse nach wenigstens einem der vorhergehenden Ansprüche,
**dadurch gekennzeichnet, dass**
die landwirtschaftliche Arbeitsmaschine ein Schlepper ist.

## Claims

1. An agricultural bale press having a control device for controlling the pressing force in a pressing passage, comprising a receiving device, a feed passage and at least one upper pivotably movable pressing flap and pivotably movable side walls equipped with pressure-applying devices,
**characterised in that**
the ratio of the pressing force of the pressure-applying device (15) of the at least one upper pivotably movable pressing flap (13) relative to the pressing force of the pressure-applying devices (16) of the pivotably movable side walls (11) is adjustable.

2. An agricultural bale press according to claim 1 **characterised in that** the pressure-applying devices (15, 16) are in the form of hydraulic working cylinders (28, 29,30,31).

3. An agricultural bale press according to at least one of the preceding claims **characterised in that** the pressure-applying devices (15, 16) are arranged on a pressing ring (14) embracing the pressing passage (8).

4. An agricultural bale press according to claim 3 **characterised in that** the pressure-applying device (15) of the upper pressing flap (13) is formed from at least three mutually juxtaposed hydraulic working cylinders (29, 30, 31).

5. An agricultural bale press according to at least one of the preceding claims **characterised in that** in dependence on the kind of crop material the force of the pressure-applying device (15) of the upper pressing flap (13) is applied either by means of the central working cylinder (30) or together by at least the two outer hydraulic working cylinders (29, 31).

6. An agricultural bale press according to claim 5 **characterised in that** the central working cylinder (30) has a hydraulic circuit separate from the two outer working cylinders (29, 31).

7. An agricultural bale press according to at least one of the preceding claims **characterised in that** the change from the application of pressing force to the pressing passage (8) by way of the central hydraulic working cylinder (30) to the application of force by way of at least the two outer hydraulic working cylinders (29, 31) is effected manually by actuation of a change-over switching valve (34).

8. An agricultural bale press according to at least one of the preceding claims **characterised in that** the pressure-applying device (15) of the upper pressing flap (13) is formed from a hydraulic working cylinder having different annular surfaces.

9. An agricultural bale press according to at least one of the preceding claims **characterised in that** the bale press (1) has at least one sensor for detecting crop material-specific parameters.

10. An agricultural bale press according to at least one of the preceding claims **characterised in that** there is at least one electronic control apparatus (19) for automatically controlling the pressing force of the pressure-applying device (15) of the upper pressing flap (13) and for controlling the pressing force of the pressure-applying devices (16) of the side walls (11, 12).

11. An agricultural bale press according to at least one of the preceding claims **characterised in that** the agricultural bale press (1) or an agricultural working machine pulling the bale press has an operating terminal (18) for adjusting the pressing force of the pressure-applying devices.

12. An agricultural bale press according to at least one of the preceding claims **characterised in that** the agricultural working machine is a tractor.

## Revendications

1. Presse à balles agricole, comprenant un dispositif de commande pour commander la force de compression dans un canal de presse, constituée d'un dispositif de ramassage, d'un canal d'alimentation et d'au moins un volet de compression supérieur pivotant et de parois latérales pivotantes qui sont équipées de dispositifs de pression, **caractérisée par le fait que** le rapport entre la force de compression du dispositif de pression (15) du volet de compression (13) supérieur pivotant, au nombre d'au moins un, et la force de compression des dispositifs de pression (16) des parois latérales (11, 12) pivotantes est réglable.

2. Presse à balles agricole selon la revendication 1, **caractérisée par le fait que** les dispositifs de pression (15, 16) sont réalisés sous forme de vérins hydrauliques (28, 29, 30, 31).

3. Presse à balles agricole selon au moins une des revendications précédentes, **caractérisée par le fait que** les dispositifs de pression (15, 16) sont installés sur un anneau de compression (14) entourant le canal de presse (8).

4. Presse à balles agricole selon la revendication 3, **caractérisée par le fait que** le dispositif de pression (15) du volet de compression (13) supérieur est constitué d'au moins trois vérins hydrauliques (29, 30, 31) placés les uns à côté des autres.

5. Presse à balles agricole selon au moins une des revendications précédentes, **caractérisée par le fait que**, en fonction du type de récolte, l'application de la force du dispositif de pression (15) du volet de compression (13) supérieur est réalisée soit à l'aide du vérin (30) du milieu, soit conjointement par au moins les deux vérins hydrauliques (29, 31) extérieurs.

6. Presse à balles agricole selon la revendication 5, **caractérisée par le fait que** le vérin (30) du milieu présente un circuit hydraulique qui est séparé des deux vérins (29, 31) extérieurs.

7. Presse à balles agricole selon au moins une des revendications précédentes, **caractérisée par le fait que** le passage de l'application de force de compression dans le canal de presse (8), par l'intermédiaire du vérin hydraulique (30) du milieu, à l'application de force par l'intermédiaire au moins des deux vérins hydrauliques (29, 31) extérieurs est effectué manuellement, par actionnement d'une vanne de commutation (34).

8. Presse à balles agricole selon au moins une des revendications précédentes, **caractérisée par le fait que** le dispositif de pression (15) du volet de compression (13) supérieur est constitué d'un vérin hydraulique présentant des surfaces annulaires différentes.

9. Presse à balles agricole selon au moins une des revendications précédentes, **caractérisée par le fait que** la presse à balles (1) comporte au moins un capteur pour déterminer des paramètres spécifiques de la récolte.

10. Presse à balles agricole selon au moins une des revendications précédentes, **caractérisée par le fait que** pour la commande automatique de la force de compression du dispositif de pression (15) du volet de compression (13) supérieur et pour la commande de la force de compression des dispositifs de pression (16) des parois latérales (11, 12), il est prévu au moins un dispositif de commande (19) électronique.

11. Presse à balles agricole selon au moins une des revendications précédentes, **caractérisée par le fait que** la presse à balles (1) agricole ou une machine agricole tractant la presse à balles présente un terminal de commande (18) pour régler la force de compression des dispositifs de pression.

12. Presse à balles agricole selon au moins une des revendications précédentes, **caractérisée par le fait que** la machine agricole est un tracteur.
